# EUROPEAN PATENT SPECIFICATION

(11) **EP 3 193 437 B1**
(45) Date of publication and mention of the grant of the patent: **19.09.2018**
(21) Application number: 16151239.7
(22) Date of filing: 14.01.2016
(51) Int. Cl.: H02M 1/44, H02M 3/335

(54) **STEP-UP CONVERTER**
AUFWÄRTSWANDLER
CONVERTISSEUR ÉLÉVATEUR

(43) Date of publication of application: 19.07.2017
(73) Proprietor: Aircontech GmbH, 6800 Feldkirch (AT)
(72) Inventor: BORST, Marcus, 73447 Oberkochen (DE)
(74) Representative: Vossius & Partner Patentanwälte Rechtsanwälte mbB

(56) References cited:
- CN-A- 101 272 086
- CN-U- 201 985 581
- CN-U- 203 387 430
- US-A- 5 528 481
- US-A1- 2010 097 000
- US-A1- 2013 214 607

## Description

### Field of the Invention

The present invention relates to a circuit topology for a step-up converter, and more particularly, to a circuit topology for a step-up converter which is directed to reduce the EMC emission and increase efficiency. The circuit topology for the step-up converter further includes a transformer, a plurality of MOSFETs and a minimum amount of capacitors.

### Background

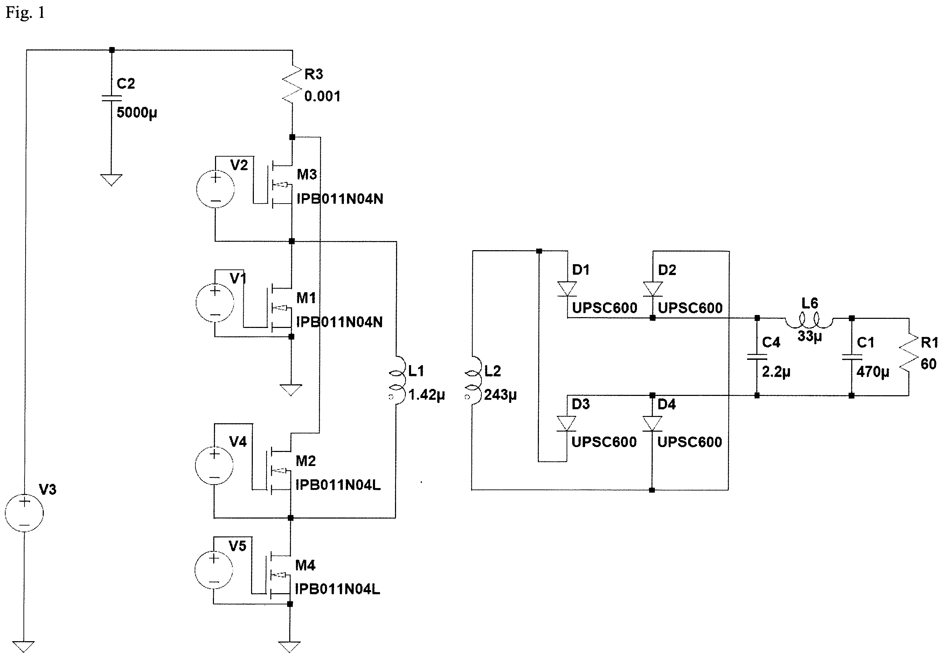

In a standard step-up converter circuit topology as shown in FIG. 1, the input voltage of voltage source V3 is normally buffered by a large capacitor C2 at the 24 volt side and alternately output with the MOSFETs in the exchanger as a square-wave voltage. Thereafter, the resultant voltage is rectified again with diodes at the high voltage side of a transformer, and then smoothed with a capacitor C1. In this conventional step-up converter, the capacitance of the capacitor C2 is typically in the range of several thousand µF, such as 5000 µF as shown in Fig. 1.

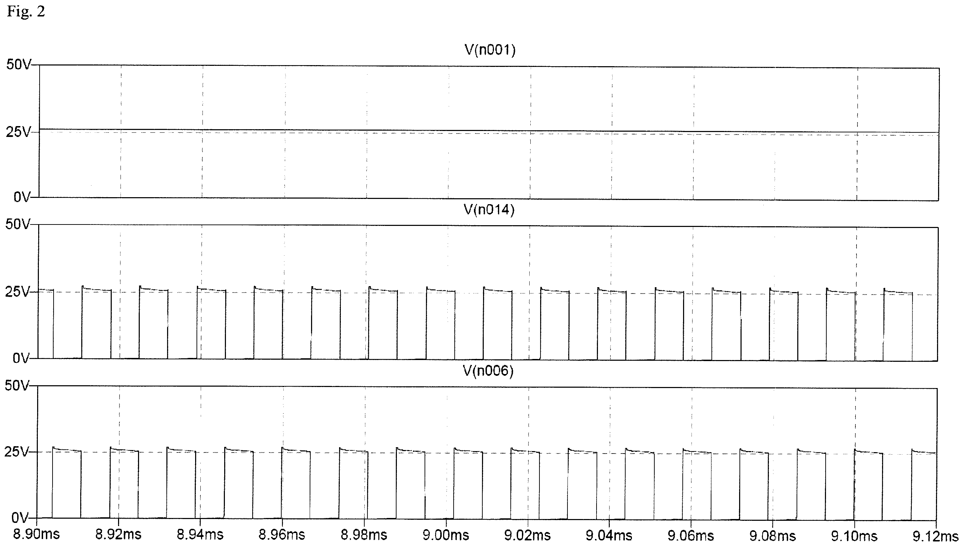

The waveforms of the resulting voltages at the capacitor C2 (which is a back-up capacitor at 24 volts) and inductor L1 at the low voltage input side of the of transformer are further illustrated in FIG. 2. As shown in FIG. 2, the voltage on V2 remains constant and, it is alternately supplying +24/-24 volts at the inductor. Furthermore, at the switching time of the MOSFETs, each MOSFET is at 24 volts, while the voltage at C2 is constant. Therefore, accordingly, the output square wave has a voltage swing of 24 volts. This results in an output power of about 1 kW at the load R1, with an output voltage of about 175 volts.

As described above, it is necessary to increase the efficiency of the step-up converter circuit topology and reduce the EMC emission.

CN 201 985 581 U discloses a circuit in Fig. 2 being is part of a PFC circuit and is operated with AC current, for example 230 V (see terminals L/N in the circuit). At the output a DC voltage is obtained, depending on the resistors R5 and R5A, which DC voltage is above the peak voltage of the input AC voltage. At an input voltage of 230 AC the output voltage is at least 320 V. The purpose of the capacitor C1 is to reduce switching transients of the PFC circuit to reduce negative effects on the AC grid.

### Summary of the Invention

Accordingly, the present invention is directed to a circuit topology for a step-up converter that substantially obviates the limitations and disadvantages of the related art. The invention is specified in the claims.

An object of the present invention is to provide circuit topology for a step-up converter that increases the efficiency of the step-up converter circuit topology and reduces the EMC emission.

To achieve these objects and other advantages and in accordance with the purpose of the invention, as embodied and broadly described herein, there is provided a step-up converter as defined in claim 1.

The step-up converter comprises an input filter that may be connectable with the first voltage supply source. The input filter comprises a first inductor, and a second capacitor. The first inductor is coupled in series with the first voltage supply source. A first end of the second capacitor is interposed in parallel between the first inductor and the first voltage supply source.

The capacitance value of the first capacitor is in the range of 3 to 10 µF, and preferably 5 µF. The capacitance value of the first capacitor is such that a voltage at the first capacitor is oscillated to obtain a higher effective voltage such that the output voltage is increased and the current to be switched is reduced.

A first end of the first capacitor is interposed in parallel between one of the plurality of MOSFETs and the first inductor. A first end of one of the plurality of MOSFETs may be coupled in parallel to the input filter. The inductance value of the first inductor may be selected so as to draw a constant current from the first voltage supply source such that the EMC radiated interference is reduced. The inductance value of the first inductor is in the range of 1 to 20 µH, preferably 1 to 5 µH, more preferably at 1 µH or 5 µH.

The transformer may comprise a second inductor at the low voltage side and a third inductor at the high voltage side thereof.

The rectifier circuit may comprise a plurality of diodes. The plurality of diodes may comprise a first diode, a second diode, a third diode and a fourth diode. The cathode end of the first diode may be coupled to the cathode end of the second diode. The cathode end of the fourth diode may be coupled to the anode end of the second diode. The anode end of the third diode may be coupled to the anode end of the fourth diode. The cathode end of the third diode may be coupled to the cathode end of the first diode. The cathode end of the second diode may be coupled to a first end of the third capacitor. The anode end of the fourth diode may be coupled to a second end of the third capacitor.

The plurality of MOSFETs may be configured to switch at 0 volts so as to keep the switching losses at a very low level and reduce the faults in the control of the plurality of MOSFETs. The plurality of MOSFETs may comprise a first MOSFET, a second MOSFET, a third MOSFET and a fourth MOSFET. The source region of the third MOSFET may be coupled to the drain region of the first MOSFET. The drain region of the third MOSFET may be coupled to the drain region of the second MOSFET. The source region of the second MOSFET may be coupled to the drain region of the fourth MOSFET. The gate and source regions of each MOSFET may be connected to a voltage supply source respectively. The source region of the third MOSFET and the drain region of the first MOSFET may be coupled to a first end of the second inductor. The source region of the second MOSFET and the drain region of the fourth MOSFET may be coupled to the second end of the second inductor. The plurality of MOSFETs may be N-channel MOSFETs.

The drain region of the third MOSFET may be coupled to the first end of a first resistor being optionally provided for measurements.

The transformer may be adapted to transform the input signal and provides as an output a sinusoidal signal so that the EMC radiation is reduced. The third capacitor may be connected between the outlet and the rectifier circuit and ground.

It is an effect of the invention to allow the use of film capacitors (which is advantageous in terms of stability and against drying), and more particularly, to replace the use of aluminium electrolyte capacitors with a special high powered capacitor that is stable in the long term and temperature-resistant.

It is another effect of the invention to eliminate pre-charging in a circuit topology for a step-up converter.

It is another advantageous effect of the invention to provide smaller winding by oscillating the voltage at C2 in order to achieve a higher effective voltage and thereby increase the output voltage and reduce the current to be switched.

It is another effect of the invention that the EMC emission is reduced, i.e. by filtering the input inductor, a very constant current from the power supply/battery is drawn, thus less EMC radiated interference can be expected. The use of sinusoidal signals rather than the steep edges when switching the conventional topology will massively reduce the EMC radiation. The control of the MOSFETs is simplified, because they are switched without power, this also results in fewer faults in the control.

It is another effect of the invention to increase the efficiency of the circuitry. The MOSFETs switch at 0 volts, thus the switching losses are very low. It is the ohmic resistance of the MOSFETs that is switched on during the sine that cannot be prevented in principle. The control of the transformer with a sinusoidal signal is also expected to increase the efficiency.

Other objects and advantages of embodiments of this invention will be apparent to those of ordinary skill in the art having reference to the following specification together with its drawings.

### BRIEF DESCRIPTION OF THE DRAWINGS

Further details, aspects and embodiment of the invention are illustrated by way of example, and not by limitation, in the figures of the accompanying drawings.
- FIG. 1: is a circuit topology of a conventional step-up converter circuit;
- FIG. 2: illustrates the waveforms of the resulting voltages at C2 and L1 (low voltage input of transformer) of the step-up converter circuit of Fig. 1;
- FIG. 3: is an example of a circuit topology for a step-up converter circuit according to an embodiment of the present invention; and
- FIG. 4: illustrates the waveforms of the resulting voltages at C2 and L1 (low voltage input of transformer) according to the embodiment of the step-up converter circuit of Fig. 3.

### DETAILED DESCRIPTION OF THE INVENTION

Hereinafter, a circuit topology for a step-up converter according to an exemplary embodiment of the present invention will be described in detail with reference to the accompanying drawings.

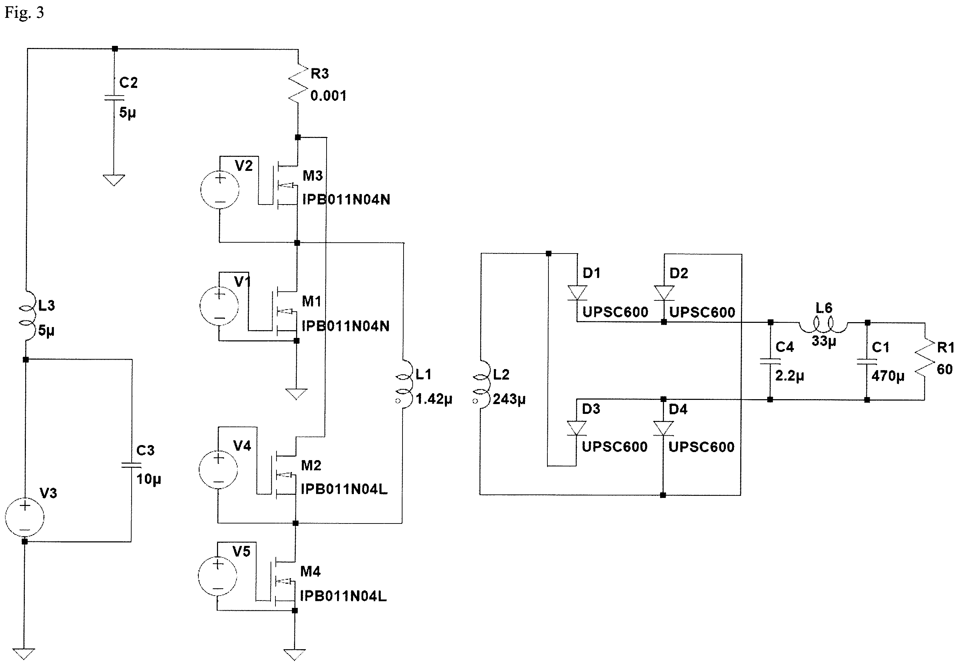

FIG. 3 shows the circuit topology for a step-up converter circuit according to the embodiment of the present invention. The circuit comprises a first capacitor C2, an input filter, and in particular, a first inductor L3. The capacitance value of the first capacitor C2 is in the range from larger than 0 to 50 µF. In the exemplary embodiment of Fig. 3 it is 5 µF. That is, in comparison to the conventional step-up converter, the capacitance is substantially lower, such as 100 to 1000 times lower. The capacitance value of the first capacitor C2 is such that a voltage at the first capacitor is oscillated to obtain a higher effective voltage such that the output voltage is increased and the current to be switched is reduced.

The input filter is connected with the first voltage supply source V3. The input filter comprises the first inductor L3 and a second capacitor C3. The first inductor L3 is coupled in series with the first voltage supply source V3. A first end of the second capacitor C3 interposed in parallel between the first inductor L3 and the first voltage supply source V3. The second end is connected to ground. The capacitance of C3 is 10 µF but may be in the range of 1 to 50 µF

The step-up converter further comprises a transformer LI, L2, and four MOSFETs M1, M2, M3, M4 connected to a low voltage L1 side of the transformer. A first end of the first capacitor C2 is interposed in parallel between MOSFET M3 and the first inductor L3. The second end of first capacitor is connected to ground.

A first end of MOSFET M3 is coupled in parallel to the input filter. The inductance value of the first inductor L3 is selected so as to draw a constant current from the first voltage supply source V3 such that the EMC radiated interference is reduced. The inductance value of the first inductor L3 is the embodiment of Fig. 3 is 5 µH.

The transformer comprises a second inductor L1 at the low voltage side and a third inductor L2 at the high voltage side thereof. The inductance of L1 in Fig. 3 is 1.42 µH but may be in the range of 0.5 to 10 µH.

The rectifier circuit comprises a first diode D1, a second diode D2, a third diode D3 and a fourth diode D4. The cathode end of the first diode D1 is coupled to the cathode end of the second diode D2. The cathode end of the fourth diode D4 is coupled to the anode end of the second diode D2. The anode end of the third diode D3 is coupled to the anode end of the fourth diode D4. The cathode end of the third diode D3 is coupled to the cathode end of the first diode D1. The cathode end of the second diode D2 is coupled to a first end of the third capacitor C1. The anode end of the fourth diode D4 is coupled to a second end of the third capacitor C1.

The third capacitor may have a capacitance in the range from 100 to 2000 µF.

The plurality of MOSFETs is configured to switch at 0 Volts so as to keep the switching losses at a very low level and reduce the faults in the control of the plurality of MOSFETs. The step-up converter comprises a first MOSFET M1, a second MOSFET M2, a third MOSFET M3, and a fourth MOSFET M4. The source region of the third MOSFET M3 is coupled to the drain region of the first MOSFET M1. The drain region of the third MOSFET M3 I connected to the drain region of the second MOSFET M2. The source region of the second MOSFET M2 is coupled to the drain region of the fourth MOSFET M4. The gate and source regions of each MOSFET are connected to a voltage supply source V1, V2, V4, V5, respectively. The source region of the third MOSFET M3 and the drain region of the first MOSFET M1 are coupled to a first end of the second inductor L1. The source region of the second MOSFET M2 and the drain region of the fourth MOSFET M4 are coupled to the second end of the second inductor L1.

In the embodiment shown in Fig. 3, the drain region of the third MOSFET M3 is coupled to the first end of measurement resistor R3.

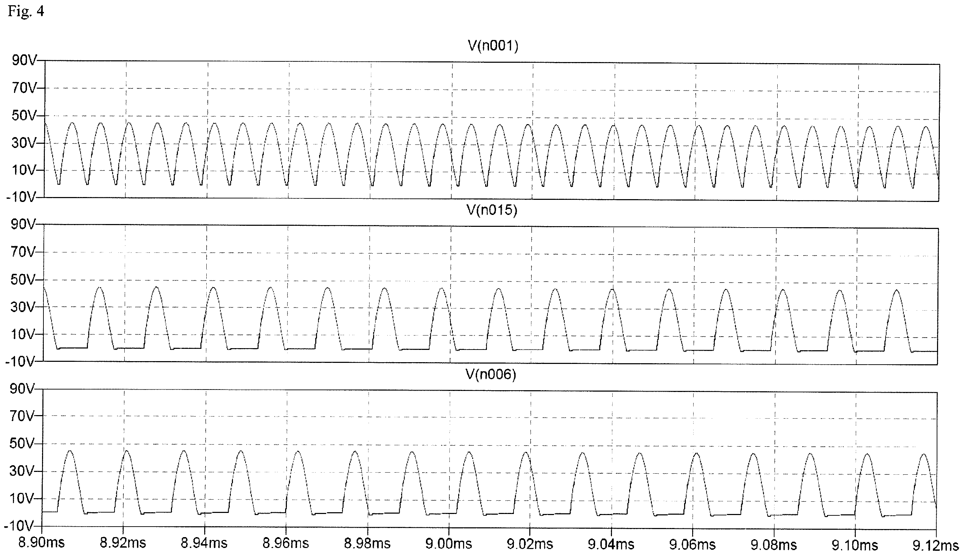

When the circuit is operated with the same control of the MOSFETs and identical input voltage as that of the background art, it will result in a different picture of the voltage of C2 and the MOSFETs result (simulated) as shown in FIG. 4.

In FIG. 4, it can be clearly seen that the voltage on C2 (top diagram) now traverses sinusoidal half-waves, in which the frequency corresponds to the switching frequency of the MOSFETs. In this way, the MOSFETs no longer output a square-wave voltage at the transformer, but instead, output half-waves. Therefore, when the difference between the two lower graphics is added, the present invention is able to achieve a technical effect of a sinusoidal control of the transformer.

Furthermore, an advantageous effect of the present invention is such that, even though the input voltage of the circuit topology is 24 Volts, the maximum voltage at C2 is not 24 volts, but instead rises up to nearly 40 volts. Thereby, this results in an output of 1.6 kW at the load R1, with an output voltage of 220 volts. Hence, as a consequence, it is possible to increase the efficiency of the step-up converter circuit topology, reduce the EMC emission and even the number of capacitors used.

Other aspects, features, and advantages will be apparent from the summary above, as well as from the description that follows, including the figures and the claims.

While the invention has been illustrated and described in detail in the drawings and foregoing description, such illustration and description are to be considered illustrative or exemplary and not restrictive. It will be understood that changes and modifications may be made by those of ordinary skill within the scope of the following claims.

Furthermore, in the claims the word "comprising" does not exclude other elements or steps, and the indefinite article "a" or "an" does not exclude a plurality. A single unit may fulfil the functions of several features recited in the claims. The terms "essentially", "about", "approximately" and the like in connection with an attribute or a value particularly also define exactly the attribute or exactly the value, respectively. Any reference signs in the claims should not be construed as limiting the scope.

## Claims

1. A step-up converter, comprising:
a first voltage supply source (V3);
a transformer (L1, L2);
a plurality of MOSFETs (M1, M2, M3, M4) connected to a low voltage side of the transformer (L1, L2);
a rectifier circuit connected to a high voltage side of the transformer (L1, L2); and
an outlet;
**characterized by** comprising:
a first capacitor (C2) connected at one end between the first voltage supply source (V3) and one of the plurality of MOSFETs (M1, M2, M3, M4);
an input filter connected with the first voltage supply source (V3);
wherein the input filter comprises a first inductor (L3), and a second capacitor (C3);
wherein the first inductor (L3) is coupled in series with the first voltage supply source (V3);
wherein a first end of the second capacitor (C3) is interposed in parallel between the first inductor (L3) and the first voltage supply source (V3);
wherein the inductance value of the first inductor (L3) is in the range of 1 to 20 µH;
wherein the first end of the first capacitor (C2) is interposed in parallel between one of the plurality of MOSFETs (M1, M2, M3, M4) and the first inductor (L3); and
wherein the capacitance value of the first capacitor (C2) is in the range of 3 to 10 µF such that a voltage at the first capacitor (C2) is oscillated to obtain a higher effective voltage such that the output voltage at the outlet is increased and the current to be switched is reduced.

2. The step-up converter according to claim 1,
wherein the capacitance value of the first capacitor (C2) is 5 µF.

3. The step-up converter according to claim 1 or 2,
wherein a first end of one of the plurality of MOSFETs (M1, M2, M3, M4) is coupled in parallel to the input filter.

4. The step-up converter according to any one of claims 1 to 3,
wherein the inductance value of the first inductor (L3) is selected so as to draw a constant current from the first voltage supply source (V3) such that the EMC radiated interference is reduced.

5. The step-up converter according to any one of claims 1 to 4,
wherein the inductance value of the first inductor (L3) is in the range of 1 to 5 µH, preferably at 1 µH or 5 µH.

6. The step-up converter according to any one of claims 1 to 5,
wherein the transformer (L1, L2) comprises a second inductor (L1) at the low voltage side and a third inductor (L2) at the high voltage side thereof.

7. The step-up converter according to any one of claims 1 to 6,
wherein the rectifier circuit comprises a plurality of diodes (D1, D2, D3, D4),
wherein the plurality of diodes comprises a first diode (D1), a second diode (D2), a third diode (D3) and a fourth diode (D4),
wherein the cathode end of the first diode (D1) is coupled to the cathode end of the second diode (D2),
wherein the cathode end of the fourth diode (D4) is coupled to the anode end of the second diode (D2),
wherein the anode end of the third diode (D3) is coupled to the anode end of the fourth diode (D4),
wherein the cathode end of the third diode (D3) is coupled to the cathode end of the first diode (D1),
wherein the cathode end of the second diode (D2) is coupled to a first end of a third capacitor (C1), and
wherein the anode end of the fourth diode (D4) is coupled to a second end of the third capacitor (C1).

8. The step-up converter according to any one of claims 1 to 7,
wherein the plurality of MOSFETs (M1, M2, M3, M4) is configured to switch at 0 volts so as to keep the switching losses at a very low level and reduce the faults in the control of the plurality of MOSFETs.

9. The step-up converter according to any one of claims 1 to 8,
wherein the plurality of MOSFETs (M1, M2, M3, M4) comprises a first MOSFET (M1), a second MOSFET (M2), a third MOSFET (M3) and a fourth MOSFET (M4),
wherein the source region of the third MOSFET (M3) is coupled to the drain region of the first MOSFET (M1),
wherein the drain region of the third MOSFET (M3) is coupled to the drain region of the second MOSFET (M2);
wherein the source region of the second MOSFET (M2) is coupled to the drain region of the fourth MOSFET (M4),
wherein the gate and source regions of each MOSFET are connected to a voltage supply source (V1, V2, V4, V5) respectively,
wherein the source region of the third MOSFET (M3) and the drain region of the first MOSFET (M1) are coupled to a first end of the second inductor (L1),
wherein the source region of the second MOSFET (M2) and the drain region of the fourth MOSFET (M4) are coupled to the second end of the second inductor (L1).

10. The step-up converter according to any one of claims 1 to 9,
wherein the plurality of MOSFETs (M1, M2, M3, M4) are N-channel MOSFETs.

11. The step-up converter according to any one of claims 1 to 10,
wherein the transformer (L1, L2) is adapted to transform the input signal and provides as an output a sinusoidal signal so that the EMC radiation is reduced.

## Patentansprüche

1. Aufwärtswandler mit:
einer ersten Spannungsversorgungsquelle (V3);
einem Transformator (L1, L2);
einer Vielzahl von MOSFETs (M1, M2, M3, M4), die mit einer Niederspannungsseite des Transformators (L1, L2) verbunden sind;
einer Gleichrichterschaltung, die mit einer Hochspannungsseite des Transformators (L1, L2) verbunden ist; und
einem Ausgang;
**dadurch gekennzeichnet, dass** er aufweist:
einen ersten Kondensator (C2), der an einem Ende zwischen der ersten Spannungsversorgungsquelle (V3) und einem der Vielzahl der MOSFETs (M1, M2, M3, M4) angeschlossen ist;
einem Eingangsfilter, der mit der ersten Spannungsversorgungsquelle (V3) verbunden ist;
wobei der Eingangsfilter einen ersten Induktor (L3) und einen zweiten Kondensator (C3) aufweist;
wobei der erste Induktor (L3) mit der ersten Spannungsversorgungsquelle (V3) in Reihe geschaltet ist;
wobei ein erstes Ende des zweiten Kondensators (C3) parallel zwischen dem ersten Induktor (L3) und der ersten Spannungsversorgungsquelle (V3) angeordnet ist;
wobei der Induktivitätswert des ersten Induktors (L3) im Bereich von 1 bis 20 µH liegt;
wobei das erste Ende des ersten Kondensators (C2) parallel zwischen einem der Vielzahl der MOSFETs (M1, M2, M3, M4) und dem ersten Induktor (L3) angeordnet ist; und
wobei der Kapazitätswert des ersten Kondensators (C2) im Bereich von 3 bis 10 µF liegt, so dass eine Spannung am ersten Kondensator (C2) in Schwingungen versetzt wird, um eine höhere effektive Spannung zu erhalten, so dass die Ausgangsspannung am Ausgang erhöht wird und der zu schaltende Strom reduziert wird.

2. Aufwärtswandler nach Anspruch 1,
wobei der Kapazitätswert des ersten Kondensators (C2) 5 µF beträgt.

3. Aufwärtswandler nach Anspruch 1 oder 2,
wobei ein erstes Ende von einem der Vielzahl der MOSFETs (M1, M2, M3, M4) parallel zum Eingangsfilter geschaltet ist.

4. Aufwärtswandler nach einem der Ansprüche 1 bis 3,
wobei der Induktivitätswert des ersten Induktors (L3) ausgewählt ist, einen Konstantstrom aus der ersten Spannungsversorgungsquelle (V3) zu ziehen, so dass die EMV-Störabstrahlung reduziert wird.

5. Aufwärtswandler nach einem der Ansprüche 1 bis 4,
wobei der Induktivitätswert des ersten Induktors (L3) im Bereich von 1 bis 5 µH liegt, vorzugsweise bei 1 µH oder 5 µH.

6. Aufwärtswandler nach einem der Ansprüche 1 bis 5,
wobei der Transformator (L1, L2) einen zweiten Induktor (L1) auf der Niederspannungsseite und einen dritten Induktor (L2) auf dessen Hochspannungsseite aufweist.

7. Aufwärtswandler nach einem der Ansprüche 1 bis 6,
wobei die Gleichrichterschaltung eine Vielzahl von Dioden (D1, D2, D3, D4) aufweist,
wobei die Vielzahl der Dioden eine erste Diode (D1), eine zweite Diode (D2), eine dritte Diode (D3) und eine vierte Diode (D4) aufweist,
wobei das Kathodenende der ersten Diode (D1) mit dem Kathodenende der zweiten Diode (D2) gekoppelt ist,
wobei das Kathodenende der vierten Diode (D4) mit dem Anodenende der zweiten Diode (D2) gekoppelt ist,
wobei das Anodenende der dritten Diode (D3) mit dem Anodenende der vierten Diode (D4) gekoppelt ist,
wobei das Kathodenende der dritten Diode (D3) mit dem Kathodenende der ersten Diode (D1) gekoppelt ist,
wobei das Kathodenende der zweiten Diode (D2) mit einem ersten Ende eines dritten Kondensators (C1) gekoppelt ist, und
wobei das Anodenende der vierten Diode (D4) mit einen zweiten Ende des dritten Kondensators (C1) gekoppelt ist.

8. Aufwärtswandler nach einem der Ansprüche 1 bis 7,
wobei die Vielzahl der MOSFETs (M1, M2, M3, M4) konfiguriert ist, bei 0 Volt zu schalten, um die Schaltverluste auf einem sehr niedrigen Pegel zu halten und die Anzahl der Fehler bei der Steuerung der Vielzahl der MOSFETs zu reduzieren.

9. Aufwärtswandler nach einem der Ansprüche 1 bis 8,
wobei die Vielzahl der MOSFETs (M1, M2, M3, M4) einen ersten MOSFET (M1), einen zweiten MOSFET (M2), einen dritten MOSFET (M3) und einen vierten MOSFET (M4) aufweist,
wobei die Source-Region des dritten MOSFET (M3) mit der Drain-Region des ersten MOSFET (M1) gekoppelt ist,
wobei die Drain-Region des dritten MOSFET (M3) mit der Drain-Region des zweiten MOSFET (M2) gekoppelt ist;
wobei die Source-Region des zweiten MOSFET (M2) mit der Drain-Region des vierten MOSFET (M4) gekoppelt ist,
wobei die Gate- und Source-Region von jedem MOSFET jeweils mit einer Spannungsversorgungsquelle (V1, V2, V4, V5) verbunden ist,
wobei die Source-Region des dritten MOSFET (M3) und die Drain-Region des ersten MOSFET (M1) mit einem ersten Ende des zweiten Induktors (L1) gekoppelt sind,
wobei die Source-Region des zweiten MOSFET (M2) und die Drain-Region des vierten MOSFET (M4) mit dem zweiten Ende des zweiten Induktors (L1) gekoppelt sind.

10. Aufwärtswandler nach einem der Ansprüche 1 bis 9,
wobei die Vielzahl der MOSFETs (M1, M2, M3, M4) aus N-Kanal-MOSFETs besteht.

11. Aufwärtswandler nach einem der Ansprüche 1 bis 10,
wobei der Transformator (L1, L2) eingerichtet ist, das Eingangssignal zu transformieren und als eine Ausgabe ein sinusförmiges Signal liefert, so dass die EMV-Abstrahlung reduziert wird.

## Revendications

1. Convertisseur élévateur, comprenant :
une première source d'alimentation en tension (V3) ;
un transformateur (L1, L2) ;
une pluralité de MOSFET (M1, M2, M3, M4) reliés à un côté basse tension du transformateur (L1, L2) ;
un circuit redresseur relié à un côté haute tension du transformateur (L1, L2) ; et
une sortie ;
**caractérisé en ce qu'**il comprend :
un premier condensateur (C2) relié à une extrémité entre la première source d'alimentation en tension (V3) et un MOSFET de la pluralité de MOSFET (M1, M2, M3, M4) ;
un filtre d'entrée relié à la première source d'alimentation en tension (V3) ;
où le filtre d'entrée comprend un premier inducteur (L3) et un deuxième condensateur (C3) ;
où le premier inducteur (L3) est relié en série à la première source d'alimentation en tension (V3) ;
où une première extrémité du deuxième condensateur (C3) est intercalée en parallèle entre le premier inducteur (L3) et la première source d'alimentation en tension (V3) ;
où la valeur d'inductance du premier inducteur (L3) est comprise entre 1 et 20 µH ;
où la première extrémité du premier condensateur (C2) est intercalée en parallèle entre un MOSFET de la pluralité de MOSFET (M1, M2, M3, M4) et le premier inducteur (L3) ; et
où la valeur de capacitance du premier condensateur (C2) est comprise entre 3 et 10 µF de sorte que la tension sur le premier condensateur (C2) est amenée à osciller pour obtenir une tension efficace supérieure afin d'élever la tension à la sortie et de réduire le courant à commuter.

2. Convertisseur élévateur selon la revendication 1,
où la valeur de capacitance du premier condensateur (C2) est 5 µF.

3. Convertisseur élévateur selon la revendication 1 ou la revendication 2,
où une première extrémité d'un MOSFET de la pluralité de MOSFET (M1, M2, M3, M4) est reliée en parallèle au filtre d'entrée.

4. Convertisseur élévateur selon l'une des revendications 1 à 3,
où la valeur d'inductance du premier inducteur (L3) est sélectionnée de manière à capter un courant constant de la première source d'alimentation en tension (V3) de manière à réduire les rayonnements perturbateurs CEM.

5. Convertisseur élévateur selon l'une des revendications 1 à 4,
où la valeur d'inductance du premier inducteur (L3) est comprise entre 1 et 5 µH, et préférentiellement égale à 1 µH ou à 5 µH.

6. Convertisseur élévateur selon l'une des revendications 1 à 5,
où le transformateur (L1, L2) comprend un deuxième inducteur (L1) sur son côté basse tension et un troisième inducteur (L2) sur son côté haute tension.

7. Convertisseur élévateur selon l'une des revendications 1 à 6,
où le circuit redresseur comprend une pluralité de diodes (D1, D2, D3, D4),
où la pluralité de diodes comprend une première diode (D1), une deuxième diode (D2), une troisième diode (D3) et une quatrième diode (D4),
où l'extrémité de cathode de la première diode (D1) est reliée à l'extrémité de cathode de la deuxième diode (D2),
où l'extrémité de cathode de la quatrième diode (D4) est reliée à l'extrémité d'anode de la deuxième diode (D2),
où l'extrémité d'anode de la troisième diode (D3) est reliée à l'extrémité d'anode de la quatrième diode (D4),
où l'extrémité de cathode de la troisième diode (D3) est reliée à l'extrémité de cathode de la première diode (D1),
où l'extrémité de cathode de la deuxième diode (D2) est reliée à une première extrémité d'un troisième condensateur (C1), et
où l'extrémité d'anode de la quatrième diode (D4) est reliée à une deuxième extrémité du troisième condensateur (C1).

8. Convertisseur élévateur selon l'une des revendications 1 à 7,
où la pluralité de MOSFET (M1, M2, M3, M4) est prévue pour commuter à 0 Volt de manière à maintenir les pertes de commutation à un très bas niveau et réduire les erreurs de commande de la pluralité de MOSFET.

9. Convertisseur élévateur selon l'une des revendications 1 à 8,
où la pluralité de MOSFET (M1, M2, M3, M4) comprend un premier MOSFET (M1), un deuxième MOSFET (M2), un troisième MOSFET (M3) et un quatrième MOSFET (M4),
où la région de source du troisième MOSFET (M3) est reliée à la région de drain du premier MOSFET (M1),
où la région de drain du troisième MOSFET (M3) est reliée à la région de drain du deuxième MOSFET (M2) ;
où la région de source du deuxième MOSFET (M2) est reliée à la région de drain du quatrième MOSFET (M4),
où les régions de grille et de source de chaque MOSFET sont reliées à une source d'alimentation en tension (V1, V2, V4, V5) respective,
où la région de source du troisième MOSFET (M3) et la région de drain du premier MOSFET (M1) sont reliées à une première extrémité du deuxième inducteur (L1),
où la région de source du deuxième MOSFET (M2) et la région de drain du quatrième MOSFET (M4) sont reliées à la deuxième extrémité du deuxième inducteur (L1).

10. Convertisseur élévateur selon l'une des revendications 1 à 9,
où la pluralité de MOSFET (M1, M2, M3, M4) est composée de MOSFET canal N.

11. Convertisseur élévateur selon l'une des revendications 1 à 10,
où le transformateur (L1, L2) est prévu pour transformer le signal d'entrée, et émet comme sortie un signal sinusoïdal de manière à réduire les rayonnements CEM.
